# EUROPÄISCHE PATENTANMELDUNG

(11) **EP 1 422 594 A2**
(43) Veröffentlichungstag der Anmeldung: **26.05.2004**
(21) Anmeldenummer: 03025804.0
(22) Anmeldetag: 10.11.2003
(51) Int. Cl.: G06F 1/16, G06F 1/18

(54) **Anordnung und Verfahren zum Kühlen eines tragbaren Rechners**

(30) Priorität: 22.11.2002 AT 17532002
(71) Anmelder: Contec Steuerungstechnik & Automation Gesellschaft m.b.H., 6330 Ebbs (AT)
(72) Erfinder: Löcker, Jury Peter, 6336 Langkampfen (AT)
(74) Vertreter: Torggler, Paul N.

(57) **Zusammenfassung**

Computer, insbesondere Industriecomputer, mit einem Gehäuse das ein von einem Rahmen eingefasstes Display aufweist, wobei im Rahmen (2) ein - vorzugsweise rundumlaufender - Kanal (5) für ein Kühlfluid angeordnet ist.

## Beschreibung

Die vorliegende Erfindung betrifft einen Computer, insbesondere Industriecomputer, mit einem Gehäuse das ein von einem Rahmen eingefasstes Display aufweist.

Da derartige Computer meist in Umgebungen mit, für den Betrieb elektronischer Bauteile ungünstigen Umweltbedingungen, eingesetzt werden, spielt die Dichtheit des Gehäuses eine äußerst große Rolle. Problematisch ist in diesem Zusammenhang, dass ein dichtes Gehäuse den Abtransport der beim Betrieb elektronischer Komponenten unweigerlich entstehenden Wärme stark behindert, wodurch es im Extremfall sogar zur Zerstörung elektronischer Bauteile kommen kann. Da passive Wärmetauscher in Form von Innen- und Außenkühlrippen häufig unzureichend sind, kommt meist ein aktives Wasserkühlungssystem mit großem Außenkühlkörper, der als Wärmetauscher dient, zum Einsatz. Dies erhöht den Platzbedarf eines derartigen Computers auf nachteilige Weise. Darüber hinaus müssen am Computergehäuse externe Anschlüsse für die Wasserzu- bzw. Abfuhr vorgesehen sein, was immer die Gefahr eines Wasseraustrittes mit sich bringt.

Aufgabe der Erfindung ist es eine gattungsgemäße Vorrichtung zu schaffen, bei der die oben angeführten Probleme des Standes der Technik nicht auftreten.

Dies wird erfindungsgemäß dadurch erreicht, dass im Rahmen ein - vorzugsweise rundumlaufender - Kanal für ein Kühlfluid angeordnet ist.

Da gattungsgemäße Computer bevorzugt derart in Maschinenanlagen oder Schaltpulten eingebaut werden, dass nur der Display freistehend ist, ist durch die erfindungsgemäße Anordnung des Kühlkanals im Rahmen nahe des Displays sichergestellt, dass ein zufriedenstellender Wärmeaustausch zwischen dem Gehäuseinneren und der Umgebung stattfinden kann.

Bei einer besonders bevorzugten Ausführungsform der Erfindung ist vorgesehen, dass der Rahmen selbst den Kanal für das Kühlfluid bildet, was eine besonders günstige Möglichkeit darstellt die erfindungsgemäße Vorrichtung zu realisieren. Dies ist besonders dann der Fall, wenn wenigstens der Rahmen, vorzugsweise das ganze Gehäuse, aus einem Strangpressprofil hergestellt ist. Diese Herstellungsart erlaubt eine besonders einfache Dimensionierung des Gehäuses, wodurch es sich für die Aufnahme von Displays verschiedenster Größen eignet. Um die Abmessungen des erfindungsgemäßen Gehäuses zu ändern, wird bei einem nach dem Strangpressverfahren hergestellten Gehäuse einfach die gewünschte Schnittlänge der Einzelteile (vorzugsweise vier) gewählt, welche dann durch einen Kleber, beispielsweise einen Zweikomponentenkleber, miteinander verbunden werden. Das Gehäuse kann dabei einstückig hergestellt werden, oder es können nur der Rahmen sowie die daran anschließenden Seitenwände einstückig hergestellt werden. Eine den Computer an seiner Rückseite abdichtende Platte kann in letzterem Fall getrennt hergestellt und mit dem restlichen Gehäuse verbunden werden.

Bei einem nach dem Stand der Technik im Gussverfahren hergestellten Rahmen oder Gehäuse, müsste für jede gewünschte Dimensionierung eine eigene Gussform hergestellt werden, was mit großen Kosten verbunden ist.

Wird der Kanal für das Kühlfluid durch den Rahmen selbst gebildet, ist es besonders vorteilhaft, den Rahmen einwandig auszuführen, da hierdurch eine optimale Wärmekopplung zwischen dem im Kanal fließenden Kühlfluid und der Umgebungsluft des Computers entsteht.

Bei einer weiteren vorteilhaften Ausführungsform der Erfindung ist vorgesehen, dass am Gehäuse nach außen und/oder ins Gehäuseinnere ragende Kühlrippen angeordnet sind. Derartige Kühlrippen verbessern den Wärmeaustausch des Gehäuseinneren mit der Umgebung des Computers. Dieser Wärmeaustausch kann in vorteilhafter Weise dadurch noch mehr verbessert werden, dass an der Innenseite des Kanals wenigstens abschnittsweise Kühlrippen angeordnet sind.

Bei einer weiteren besonders bevorzugten Ausführungsform der Erfindung ist vorgesehen, dass am Kühlkanal Anschlussstutzen, welche ins Gehäuseinnere ragen, angeordnet sind. Dies gestattet es eine fluidleitende Verbindung (beispielsweise eine Schlauchverbindung) zwischen dem im Rahmen angeordneten Kanal und im Gehäuseinneren an einzelnen Komponenten angeordneten Wärmetauschern herzustellen.

Bei einer weiteren vorteilhaften Ausführungsform der Erfindung ist vorgesehen, dass genau zwei derartige Anschlussstutzen vom Kühlkanal ins Gehäuseinnere ragen, wobei sie vorzugsweise an der Ober- bzw. Unterseite des Rahmens, vorzugsweise mittig, angeordnet sind. Wird über diese zwei Anschlussstutzen eine fluidleitende Verbindung mit einem wärmeerzeugenden Bauteil im Gehäuseinneren hergestellt, kommt es bereits durch die natürlich auftretende Konvektion zu einer zufriedenstellenden Zirkulation des Kühlfluids im Kühlkanal, ohne dass eine Pumpe zur Aufrechterhaltung der Zirkulation benötigt wird:

Nachdem das Kühlfluid die Wärme der elektronische Bauteile aufgenommen hat, steigt es durch seine geringere Dichte von selbst in Richtung des oberen Anschlussstutzen, von wo es in den Kühlkanal eintritt und entlang beider Seiten horizontal weiterfließt. Dabei gibt es seine Wärme an die Umgebung des Industriecomputers ab, was seine Dichte vergrößert, sodass es an den beiden vertikalen Teilstücken des Kühlkanals der Schwerkraft folgend in den unteren horizontalen Bereich des Kanales gelangt. Von dort aus wird es durch das nachströmende Fluid über den unteren Anschlussstutzen wieder nach oben zum wärmeerzeugenden Bauteil gedrückt, wodurch sich der Kühlkreislauf schließt.

Bei einer weiteren vorteilhaften Ausführungsform der Erfindung ist vorgesehen, dass das Kühlfluid eine Flüssigkeit, beispielsweise Wasser ist. Zur Verringerung der Bildung von Ablagerungen im Kühlkanal kann bevorzugt destilliertes Wasser verwendet werden. Dabei ist vorzugsweise vorgesehen, dass die Einbringung des Kühlfluids, im speziellen Wasser, bereits werkseitig bei der Montage des Computergehäuses erfolgt. Während der gesamten Lebensdauer des erfindungsgemäßen Computergehäuses ist in diesem Fall kein Wechsel des Kühlfluids vorgesehen, sodass vollständig auf externe Anschlussstutzen verzichtet werden kann.

Bei einer weiteren vorteilhaften Ausführungsform der Erfindung ist vorgesehen, dass das Display als Touch-Display ausgebildet ist. Dadurch kann in vorteilhafter Weise auf die Anordnung eines eigenen Keyboards zur Bedienung des erfindungsgemäßen Computers verzichtet werden.

Falls mehrere wärmeerzeugende Bauteile oder wenige Bauteile mit großer Wärmeerzeugung in den erfindungsgemäßen Kühlkreislauf eingebunden werden sollen, kann bei einer vorteilhaften Ausführungsform der Erfindung vorgesehen sein, dass im Gehäuseinneren wenigstens eine Pumpe zur Zirkulation des Kühlfluids im Kühlkreislauf angeordnet ist. Dadurch wird auch bei einer sehr großen Wärmeentwicklung ein zufriedenstellender Wärmeaustausch sichergestellt.

Die vorliegende Erfindung betrifft nicht nur einen gattungsgemäßen Computer gemäß dem Patentanspruch 1, sondern auch ein Gehäuse mit oder ohne rückseitiger Platte für elektronische Bauteile, in dem noch keine elektronischen Bauteile installiert sind sowie ein Verfahren zur Kühlung elektronischer Bauteile in einem derartigen Computer bzw. Gehäuse, bei dem das im Rahmen zirkulierende Kühlfluid zur Kühlung wenigstens eines elektronischen Bauteiles - vorzugsweise wenigstens der CPU - über eine fluidleitende Verbindung ins Gehäuseinnere geleitet wird.

Weitere Einzelheiten der Erfindung können der nachfolgenden Figurenbeschreibung entnommen werden. Dabei zeigen:
Fig. 1a, 1b, 1c und 1d eine perspektivische Ansicht, eine Frontansicht, eine Seitenansicht sowie eine Rückansicht eines erfindungsgemäßen Computers,
Fig. 2a eine Frontansicht eines erfindungsgemäßen Computers,
Fig. 2b eine Schnittdarstellung durch einen erfindungsgemäßen Computer entlang der Ebene A der Fig. 2a,
Fig. 2c eine Detailansicht zu Fig. 2b,
Fig. 3 eine Draufsicht auf ein erfindungsgemäßes Computergehäuse bei entfernter rückseitiger Gehäuseplatte,
Fig. 4a in schematischer Darstellung den Kühlkreislauf bei einem erfindungsgemäßen Computer,
Fig. 4b die perspektivische schematische Darstellung eines Details der Fig. 3a,
Fig. 4c eine weitere schematische Darstellung des Kühlkreislaufs in einem erfindungsgemäßen Computer bei Versorgung mehrerer elektronischer Komponenten,
Fig. 4d eine schematische Darstellung des Kühlkreislaufs bei einem weiteren Ausführungsbeispiel eines erfindungsgemäßen Computers und
Fig. 5 ein erfindungsgemäßer Computer im eingebauten Zustand.

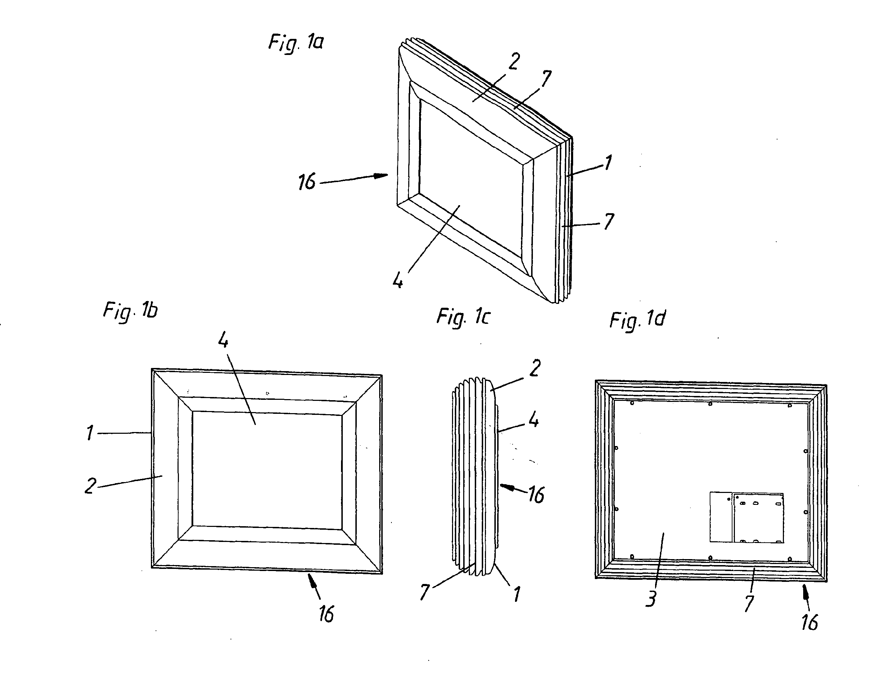

Fig. 1a zeigt ein erfindungsgemäßes Gehäuse 1 eines Industriecomputers 16 mit einem Display 4, das von einem Rahmen 2 eingefasst wird. Fig. 1b zeigt dasselbe Gehäuse 1 in einer Frontansicht. In der Seitenansicht der Fig. 1c sind sehr gut die erfindungsgemäßen gehäuseaußenseitigen Kühlrippen 7 zu erkennen. Fig. 1d zeigt das erfindungsgemäße Gehäuse 1 in einer rückseitigen Draufsicht, wobei die das Gehäuse 1 rückseitig abdichtende Platte 3 zu erkennen ist.

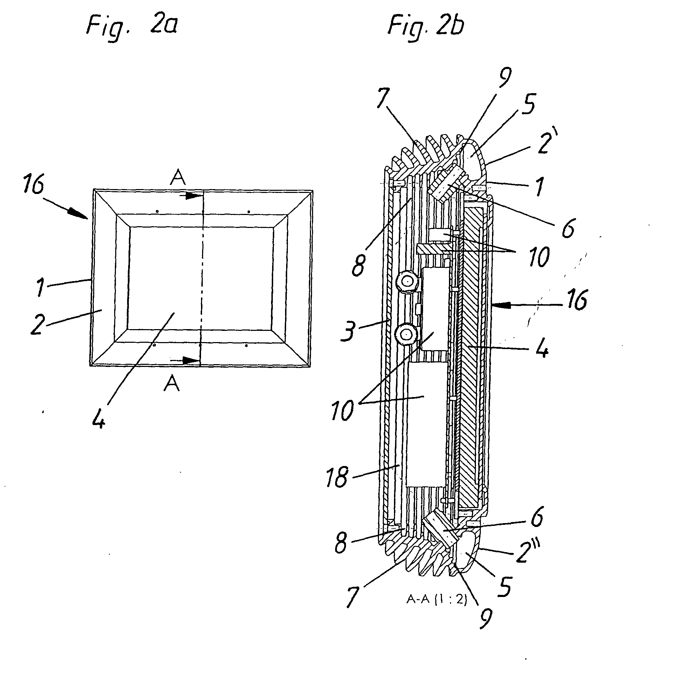

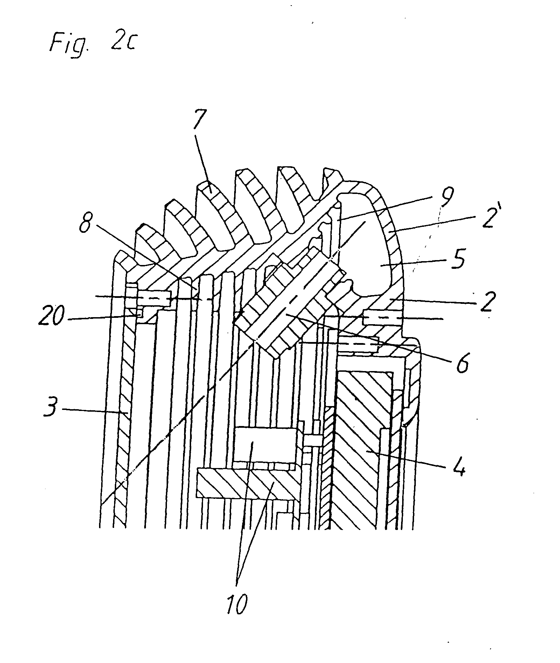

Fig. 2b ist eine Schnittdarstellung des erfindungsgemäßen Gehäuses 1 entlang der Ebene A der Fig. 2a. Gut zu erkennen ist vor allem die erfindungsgemäße Anordnung des Kühlkanals 5 im Rahmen 2 des Gehäuses 1. Der Kühlkanal 5 ist in diesem Ausführungsbeispiel durch den Rahmen 2 selbst ausgebildet. In diesem Ausführungsbeispiel ist der Rahmen 2 und damit der Kühlkanal 5 einwandig ausgebildet. Im gezeigten Ausführungsbeispiel ist das Gehäuse 1 im Strangpressverfahren hergestellt. Gehäuseaußenseitige 7 und gehäuseinnenseitige 8 Kühlrippen verbessern den Wärmeaustausch mit der Umgebung, falls der Industriecomputer 16 nicht direkt in eine Anlage 17 eingebaut ist, sondern über einen gewissen seitlichen Freiraum verfügt. In diesem Ausführungsbeispiel sind zwei Anschlussstutzen 6 zur Herstellung einer - in dieser Figur nicht dargestellten - fluidleitenden Verbindung 13 ins Gehäuseinnere 18 vorgesehen. Die Anordnung dieser Anschlussstutzen 6 erfolgt vorteilhafterweise wie dargestellt, wobei ein Anschlussstutzen 6 an der Rahmenoberseite 2' und der andere Anschlussstutzen 6 an der Rahmenunterseite 2" ungefähr mittig angeordnet sind. Zu erkennen sind weiters schematisch dargestellte elektronische Bauteile 10, die im Gehäuseinneren 18 auf eine dem Fachmann geläufige Art und Weise befestigt sind. Ebenfalls zu erkennen sind die an der Innenseite des Kanals 5 ausgebildeten Kühlrippen 9, die zur weiteren Verbesserung des Wärmeaustausches dienen. Die Rückseite des Computers 16 ist durch eine Platte 3 abgedichtet, wobei speziell in Fig. 2c ein eingelegter Dichtungsring 20 zu erkennen ist.

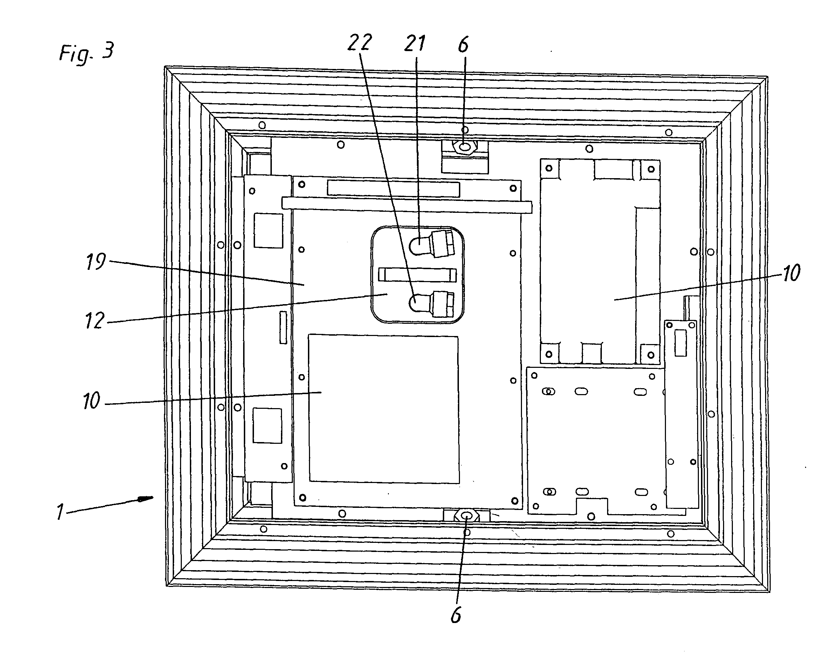

In Fig. 3 wurde die gehäuserückseitige Platte 3 entfernt, was einen Einblick ins Gehäuseinnere 18 erlaubt. Zu erkennen sind die mittige Anordnung der an der Rahmenoberseite 2' sowie an der Rahmenunterseite 2" angeordneten Anschlussstutzen 6 sowie ein Wärmetauscher 12 mit zwei Anschlüssen 21, 22, welche über eine nicht dargestellte fluidleitende Verbindung 13 mit den Anschlussstutzen 6 verbindbar sind. Des weiteren sind verschiedene schematisch dargestellte elektronische Bauteile 10 zu erkennen, unter anderem ein Motherboard 19.

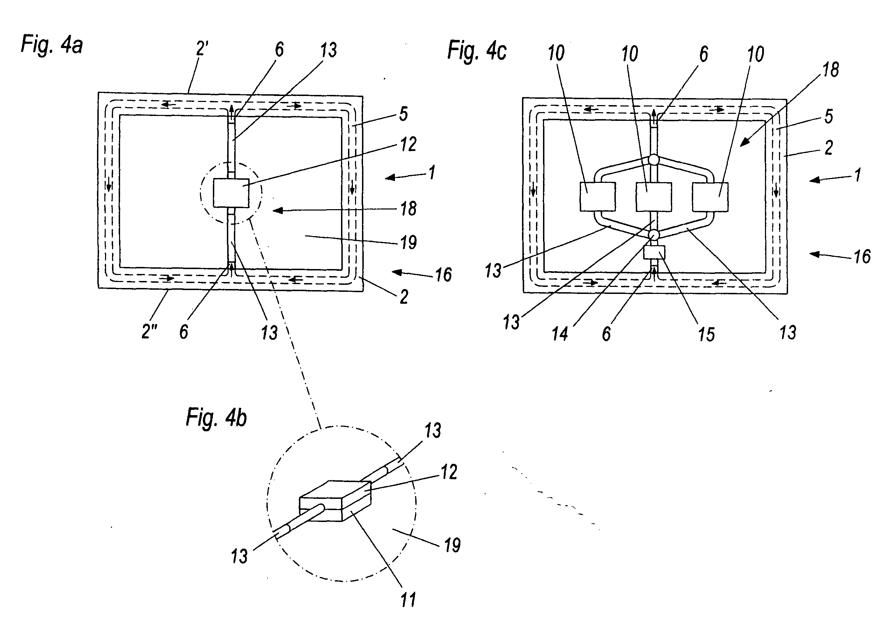

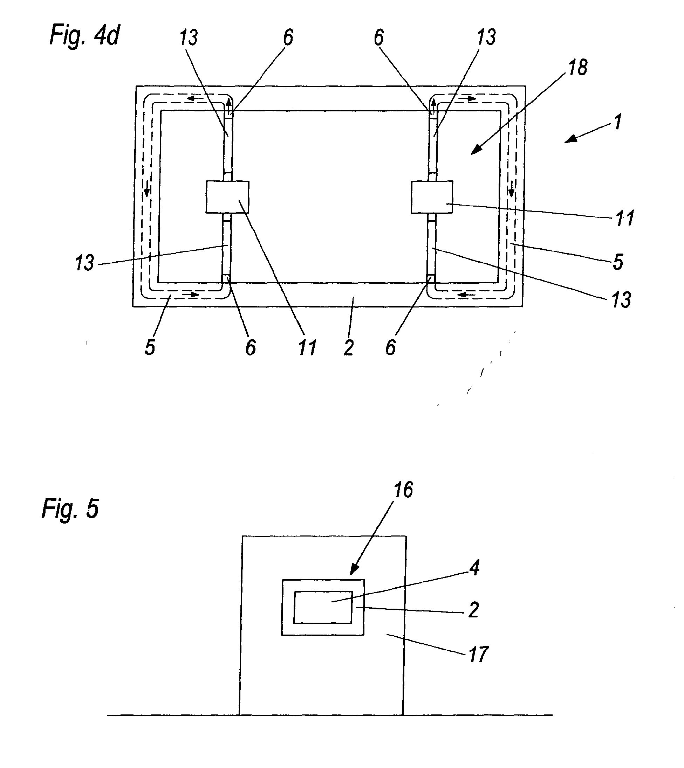

Fig. 4 zeigt nochmals die Wirkungsweise des erfindungsgemäßen Kühlsystems bei verschiedenen Ausführungsbeispielen:

In Fig. 4a, welche eine schematische Darstellung eines erfindungsgemäßen Industriecomputers 18 in rückseitiger Draufsicht darstellt, zeigt einen Kühlkreislauf, bei dem ein Wärmetauscher 12 im Gehäuseinneren 18 über der CPU 11 des Computers 16 angeordnet ist, welcher von dem im Rahmen zirkulierenden Kühlfluid durchflossen wird. Nachdem das Kühlfluid im Wärmetauscher 12, welcher beispielsweise als hohles Kupfer- oder Aluminiumteil mit zwei Anschlüssen ausgeführt ist, Wärme aufgenommen und dadurch seine Dichte verringert hat, steigt es entgegen der Schwerkraft durch die beispielhaft dargestellte Schlauchverbindung 13 zum an der Rahmenoberseite 2' angeordneten Anschlussstutzen 6, ohne dass dafür die Unterstützung einer Pumpe notwendig wäre. Nach dem Eintritt in den Kühlkanal 5 im Bereich der Rahmenoberseite 2' kommt es zu einer beidseitigen horizontalen Weiterbewegung des Kühlfluids entlang der horizontalen Rahmenoberseite 2', wobei das Kühlfluid ständig Wärme an die Umgebung des Computers 16 abgibt und dabei seine Dichte wieder vergrößert. Das abgekühlte Kühlfluid fällt über die beiden vertikalen Bereiche des Kühlkanals 5 zur Rahmenunterseite 2", von wo es durch das nachdrängende Fluid über den an der Rahmenunterseite 2" angeordneten Anschlussstutzen 6 wieder ins Gehäuseinnere 18 in die untere Schlauchleitung 13 und somit wieder zum Wärmetauscher 12 gelangt. Dies schließt den Kühlkreislauf.

Fig. 4b zeigt schematisch im Detail die Anordnung des Wärmetauschers 12 an der Oberseite der CPU 11, welche an einem Motherboard 19 angeordnet ist. Es sind natürlich auch Ausführungen von Wärmetauschern 12 denkbar, welche die elektronischen Komponenten vollständig umhüllen und so zu einer verbesserten Wärmeabfuhr führen.

Fig. 4c zeigt ebenfalls schematisch ein weiteres Ausführungsbeispiel eines erfindungsgemäßen Industriecomputers 16, wobei im Unterschied zur Fig. 3a mehrere schematisch dargestellte elektronische Bauteile 10 im Gehäuseinneren 18 über Schlauchverbindungen 13 mit den beiden Anschlussstutzen 6 in fluidleitender Verbindung stehen. Zur Verbesserung des Wärmeaustausches kann vorallem bei großen Anlagen durchaus vorgesehen sein, eine Pumpe 15 im Gehäuseinneren 18 anzuordnen. In Fig. 3c ist zu erkennen, dass auch bei der Versorgung mehrerer elektronischer Komponenten 10 zwei Anschlussstutzen 6 ausreichend sein können, wenn es zum Einsatz eines Schlauchverteilers 14 kommt.

Fig. 4d zeigt schematisch ein weiteres Ausführungsbeispiel eines erfindungsgemäßen Industriecomputers 16, bei dem zwei voneinander getrennte Kühlkreisläufe zur Versorgung elektronischer Komponenten 10 (im hier gezeigten Beispiel zwei CPUs 11) vorgesehen sind. Im gezeigten Beispiel wurden dafür vier Anschlussstutzen 6 zur Fluidleitung ins Gehäuseinnere 18 vorgesehen.

Fig. 5 zeigt schematisch einen erfindungsgemäßen Industriecomputer 16, der in eine Anlage 17 derart eingebaut wurde, dass nur der Rahmen 2 sowie das Display 4 mit der Umgebung in Kontakt stehen. Durch die erfindungsgemäße Anordnung des Kühlkanals 5 reicht dies bereits für eine ausreichende Kühlung der in Fig. 4 nicht dargestellten elektronischen Bauteile 10 im Gehäuseinneren 18 des erfindungsgemäßen Industriecomputers 16 aus.

Auf die Darstellung und Beschreibung von Details sowie Handlungsweisen, die dem Fachmann geläufig sind, wurde in den Figuren sowie in der Figurenbeschreibung verzichtet.

## Patentansprüche

1. Computer, insbesondere Industriecomputer (16), mit einem Gehäuse (1) das ein von einem Rahmen (2) eingefasstes Display (4) aufweist, **dadurch gekennzeichnet, dass** im Rahmen (2) ein - vorzugsweise rundumlaufender - Kanal (5) für ein Kühlfluid angeordnet ist.

2. Computer nach Anspruch 1, **dadurch gekennzeichnet, dass** der Rahmen (2) selbst den Kanal (5) für das Kühlfluid bildet.

3. Computer nach Anspruch 1 oder 2, **dadurch gekennzeichnet, dass** wenigstens der Rahmen (2), vorzugsweise das ganze Gehäuse (1), aus einem Strangpressprofil hergestellt ist.

4. Computer nach einem der Ansprüche 1 bis 3, **dadurch gekennzeichnet, dass** am Gehäuse (1) nach außen und/oder ins Gehäuseinnere (18) ragende Kühlrippen (7, 8) angeordnet sind.

5. Computer nach einem der Ansprüche 1 bis 4, **dadurch gekennzeichnet, dass** an der Innenseite des Kanals (5) wenigstens abschnittsweise Kühlrippen (9) angeordnet sind.

6. Computer nach einem der Ansprüche 1 bis 5, **dadurch gekennzeichnet, dass** am Kanal (5) - vorzugsweise genau zwei - ins Gehäuseinnere (18) ragende Anschlussstutzen (6) - vorzugsweise je einer an der Ober- (2') und Unterseite (2") des Rahmens (2) - angeordnet sind.

7. Computer nach einem der Ansprüche 1 bis 6, **dadurch gekennzeichnet, dass** eine fluidleitende Verbindung (13) - vorzugsweise eine Schlauchverbindung - zwischen dem im Rahmen (2) angeordneten Kanal (5) und wenigstens einem - vorzugsweise an der CPU (11) angeordneten - Wärmetauscher (12) im Gehäuseinneren (18) besteht.

8. Computer nach einem der Ansprüche 1 bis 7, **dadurch gekennzeichnet, dass** im Gehäuseinneren (18) wenigstens eine Pumpe (15) zur Zirkulation des Kühlfluids im Kühlkreislauf (5, 6, 12, 13, 14) angeordnet ist.

9. Computer nach einem der Ansprüche 1 bis 8, **dadurch gekennzeichnet, dass** das Kühlfluid eine Flüssigkeit - vorzugsweise Wasser - ist.

10. Computer nach Anspruch 9, **dadurch gekennzeichnet, dass** das Kühlfluid destilliertes Wasser ist.

11. Computer nach einem der Ansprüche 1 bis 10, **dadurch gekennzeichnet, dass** das Display (4) als Touch-Display ausgebildet ist.

12. Gehäuse (1) für elektronische Bauteile (10), insbesondere eines Computers nach einem der Ansprüche 1 bis 11, **dadurch gekennzeichnet, dass** es einen Rahmen (2) umfasst, in dem ein Kanal (5) für ein Kühlfluid angeordnet - vorzugsweise ausgebildet - ist.

13. Verfahren zur Kühlung elektronischer Bauteile (10) in einem Computer bzw. Gehäuse (1) nach einem der Ansprüche 1 bis 12, **dadurch gekennzeichnet, dass** das im Rahmen (2) zirkulierende Kühlfluid zur Kühlung wenigstens eines elektronischen Bauteiles (10) - vorzugsweise wenigstens der CPU (11) - über eine fluidleitende Verbindung (13) ins Gehäuseinnere (18) geleitet wird.
